# EUROPEAN PATENT APPLICATION

(11) **EP 2 689 819 A1**
(43) Date of publication of application: **29.01.2014**
(21) Application number: 12760236.5
(22) Date of filing: 16.03.2012
(51) Int. Cl.: A63F 13/12, G06F 13/00

(54) **INFORMATION PROCESSING DEVICE AND METHOD, PROGRAM, RECORDING MEDIUM, AND INFORMATION PROCESSING SYSTEM**

(30) Priority: 23.03.2011 JP 2011064509
(71) Applicant: Sony Corporation, Tokyo 108-0075 (JP)
(72) Inventor: NAGAO Sadakazu, Tokyo 108-0075 (JP); INAMOTO Shinji, Tokyo 108-0075 (JP); TAKEMURA Shinichi, Tokyo 108-0075 (JP)
(74) Representative: Mills, Julia
(86) International application number: PCT/JP2012/056809
(87) International publication number: WO 2012/128190

(57) **Abstract**

The present technology relates to an information processing apparatus and a method, a program, a recording medium, and an information processing system that realizes a number of variations in functions using a plurality of devices connected to a network. RD-Agent and RD-App are executed in each device, the RD-App is described using RD-Library, and a function of the RD-Agent is called by the RD-Library. The RD-Library is a library for calling the function of the RD-Agent from the RD-App. A service a is provided, to which a plurality of devices having RD-App_a1 and RD-App_a2 in execution participates, and a service b in which the plurality of devices in which RD-App_b1 and RD-App_b2 are executed participates is provided. A service a is provided, to which a plurality of devices having RD-App_a1 and RD-App_a2 in execution participates, and a service b is provided, to which a plurality of devices having RD-App_b1 and RD-App_b2 in execution participates.

## Description

### TECHNICAL FIELD

The present technology relates to an information processing apparatus and a method, a program, a recording medium, and an information processing system, and especially relates to an information processing apparatus and a method, a program, a recording medium, and an information processing system that realizes a large number of variations in functions using a plurality of devices connected to a network.

### BACKGROUND ART

In the past, services such as an online game using a plurality of mobile terminals connected to the network have been provided.

In such an online game, for example, the mobile terminal connected by a wireless LAN and an electronic device such as a mobile music reproduction device are used, an image of the game is displayed on a screen of the mobile terminal, and the game is played using the electronic device as a controller.

Further, for example, a technology for installing software into a plurality of home appliances connected to a home LAN and for updating the software has been proposed (for example, see Patent Document 1.

### CITATION LIST

### PATENT DOCUMENT

Patent Document 1: Japanese Patent Application Laid-Open No. 2002-182923

### SUMMARY OF THE INVENTION

### PROBLEMS TO BE SOLVED BY THE INVENTION

However, the past technology has a following problem, for example.

For example, to enjoy the online game, the mobile terminals and the like need to respectively initiate application programs of the game. Therefore, the mobile terminals and the like need to download and install the application programs, respectively.

Therefore, for example, each user of the mobile terminals needs to know the name and the URL of the application program, and an installation method of the application program.

Further, as described above, since the electronic device is used as a controller, another application program for controlling an input/output of information between the mobile terminal and the electronic device is necessary, and it is necessary to perform an operation of associating the another application program and the application program of the game. In addition, at the time of initiation of the application program of the game, a waiting state of searching for the another application program is caused.

Further, for example, the technology of Patent Document 1 has not considered installing the application program of the game into each of the plurality of devices that are to participate in the same game.

The present technology has been made in view of the foregoing, and realizes a number of variations in functions using a plurality of devices connected to the network.

### SOLUTIONS TO PROBLEMS

A first aspect of the present technology is an information processing apparatus including: a device information transmission unit configured to transmit device information to another information processing apparatus connected to a network; a participation asking data reception determination unit configured to determine whether participation asking data has been received, the participation asking data being data to be transmitted based on the device information by the another information processing apparatus having received the device information, and prompting participation to a service concerning processing of an application program being executed by the another information processing apparatus; and an execution determination unit configured to determine whether either execution of an application program for participating in the service, or installation and execution of the application program for participating in the service when it is determined that the participation asking data has been received.

When it is determined that a plurality of the participation asking data respectively prompting participation to a plurality of services has been received, the execution determination unit may perform notification of allowing a user to determine appropriateness of the participation to each of the plurality of services, and determine whether either execution of an application program for participating in the service or installation and execution of the application program for participating in the service based on selection by the user.

When it is determined that a plurality of the participation asking data respectively prompting participation to a plurality of services has been received, the execution determination unit may determine whether either execution of an application program for participating in the services, or execution and installation of the application program for participating in the services based on description of a setting file stored in advance.

The information processing apparatus may further include: a device information reception unit configured to receive device information of the another information processing apparatus transmitted from the another information processing apparatus through the network. When it is determined that the participation asking data has not been received, and when an application program incorporated in the information processing apparatus itself is executed, the information processing apparatus may transmit, to the another information processing apparatus, participation asking data prompting participation to a service concerning processing of the executed application program, based on the received device information of the another information processing apparatus.

The information processing apparatus may further include: a device information reception unit configured to receive device information of the another information processing apparatus transmitted from the another information processing apparatus through the network. When determination of not performing the execution of an application program for participating in the service, or the installation and execution of the application program for participating in the service has been made, and when an application program incorporated in the information processing apparatus itself is executed, the information processing apparatus may transmit, to the another information processing apparatus, participation asking data prompting participation to a service concerning processing of the executed application program, based on the received device information of the another information processing apparatus.

When determination of performing the execution of an application program for participating in the service has been made by the execution determination unit, the information processing apparatus may execute the application program specified based on information described in the participation asking data.

When determination of performing the installation and execution of the application program for participating in the service has been made by the execution determination unit, the information processing apparatus may download and install the application program based on URL described in the participation asking data, and execute the installed application program.

Processing by the application program may be realized using a function of an agent program incorporated in each of the information processing apparatus itself and the another information processing apparatus.

When it is determined that a plurality of the participation asking data respectively prompting participation to a plurality of services has been received, the execution determination unit may display a GUI allowing a user to determine appropriateness of the participation to each of the plurality of services.

The device information transmission unit may transmit device information including a communication address in the network, a type of OS, and information concerning hardware to the anotherinformation processing apparatus connected to the network.

The first aspect of the present technology is an information processing method including the steps of: transmitting device information to another information processing apparatus connected to a network by a device information transmission unit; determining, by a participation asking data reception determination unit, whether participation asking data has been received, the participation asking data being data to be transmitted based on the device information by the another information processing apparatus having received the device information, and prompting participation to a service concerning processing of an application program being executed by the another information processing apparatus, and determining, by an execution determination unit, whether either execution of an application program for participating in the service, or installation and execution of the application program for participating in the service when it is determined that the participation asking data has been received.

The first aspect of the present technology is a program for causing a computer to function as: a device information transmission unit configured to transmit device information to another information processing apparatus connected to a network; a participation asking data reception determination unit configured to determine whether participation asking data has been received, the participation asking data being data to be transmitted based on the device information by the another information processing apparatus having received the device information, and prompting participation to a service concerning processing of an application program being executed by the another information processing apparatus; and an execution determination unit configured to determine whether either execution of an application program for participating in the service, or installation and execution of the application program for participating in the service when it is determined that the participation asking data has been received.

According to the first aspect of the present technology, device information including a communication address in a network, a type of OS, and information concerning hardware is transmitted to another information processing apparatus connected to the network; whether participation asking data has been received is determined, the participation asking data being data to be transmitted based on the device information by the another information processing apparatus having received the device information, and prompting participation to a service concerning processing of an application program being executed by the another information processing apparatus; and whether either execution of an application program for participating in the service, or installation and execution of the application program for participating in the service is determined when it is determined that the participation asking data has been received.

A second aspect of the present technology is an information processing system including: a first information processing apparatus connected to a network; and a second information processing apparatus, wherein the first information processing apparatus includes an asking data transmission unit configured to transmit, to the second information processing apparatus, participation asking data prompting participation to a service concerning processing of an application program in execution, based on device information to be transmitted from the second information processing apparatus, and the second information processing apparatus includes a device information transmission unit configured to transmit information including a communication address in the network, a type of OS, and information concerning hardware to the first information processing apparatus as the device information, a participation asking data reception determination unit configured to determine whether the participation asking data has been received, the participation asking data being transmitted based on the device information by the first information processing apparatus having received the device information, and an execution determination unit configured to determine whether either execution of an application program for participating in the service, or installation and execution of the application program for participating in the service is executed when it is determined that the participation asking data has been received.

In the second aspect of the present technology, participation asking data prompting participation to a service concerning processing of an application program in execution is transmitted to a second information processing apparatus by the first information processing apparatus based on device information to be transmitted from the second information processing apparatus; information including a communication address in the network, a type of OS, and information concerning hardware is transmitted from the second information processing apparatus to the first information processing apparatus, as the device information; whether the participation asking data has been received is determined, the participation asking data being transmitted based on the device information by the first information processing apparatus having received the device information; and whether either execution of an application program for participating in the service, or installation and execution of the application program for participating in the service is performed is determined when it is determined that the participation asking data has been received.

### EFFECTS OF THE INVENTION

According to the present technology, a number of variations in functions are realized using a plurality of devices connected to the network.

### BRIEF DESCRIPTION OF DRAWINGS

Fig. 1 is a diagram illustrating a configuration example of a cooperative processing system according to an embodiment of the present technology.
Fig. 2 is a block diagram illustrating a configuration example of a device 21 of Fig. 1.
Fig. 3 is a block diagram illustrating a configuration example of a device 22 of Fig. 1.
Fig. 4 is a diagram describing a mah-jong game that is one of services executed in a plurality of devices in cooperation with each other.
Fig. 5 is a diagram describing a car race game that is another service.
Fig. 6 is a diagram illustrating an example of a game between users in the service of Fig. 5.
Fig. 7 is a diagram describing a fishing game that is another service.
Fig. 8 is a diagram describing an example in which a plurality of services is provided within the same LAN.
Fig. 9 is a diagram describing an example in which one device prompts another device to participate in a service.
Fig. 10 is a diagram illustrating an example of a screen displayed when being prompted to participate in a service by another device.
Fig. 11 is a diagram describing a relationship among RD-Agent, RD-App, RD-Library, and a service.
Fig. 12 is a diagram illustrating an example of RD device information.
Fig. 13 is a diagram illustrating an example of service information.
Fig. 14 is a flowchart describing an example of processing of RD-Agent.
Fig. 15 is a flowchart describing an example of participation appropriateness determination processing.

### MODE FOR CARRYING OUT THE INVENTION

Hereinafter, embodiments of a technology to be disclosed herewith will be described with reference to the drawings.

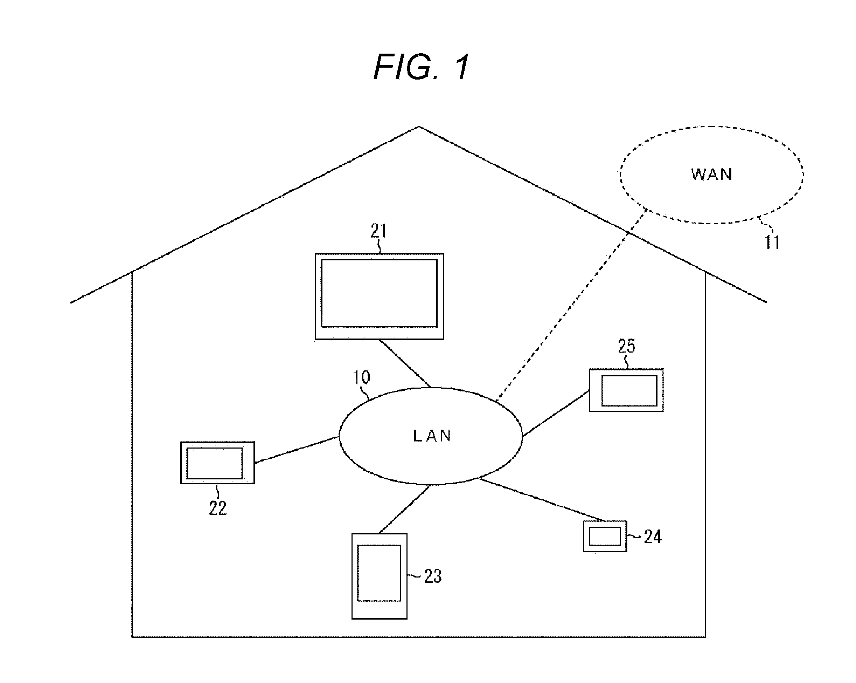

Fig. 1 is a diagram illustrating a configuration example of a cooperative processing system according to an embodiment of the present technology. In this example, devices 21 to 25 are connected to a LAN (Local Area Network) 10 to configure a cooperative processing system. Note that the LAN 10 is connected to a WAN (Wide Area Network) 11 through a router (not illustrated) and the like.

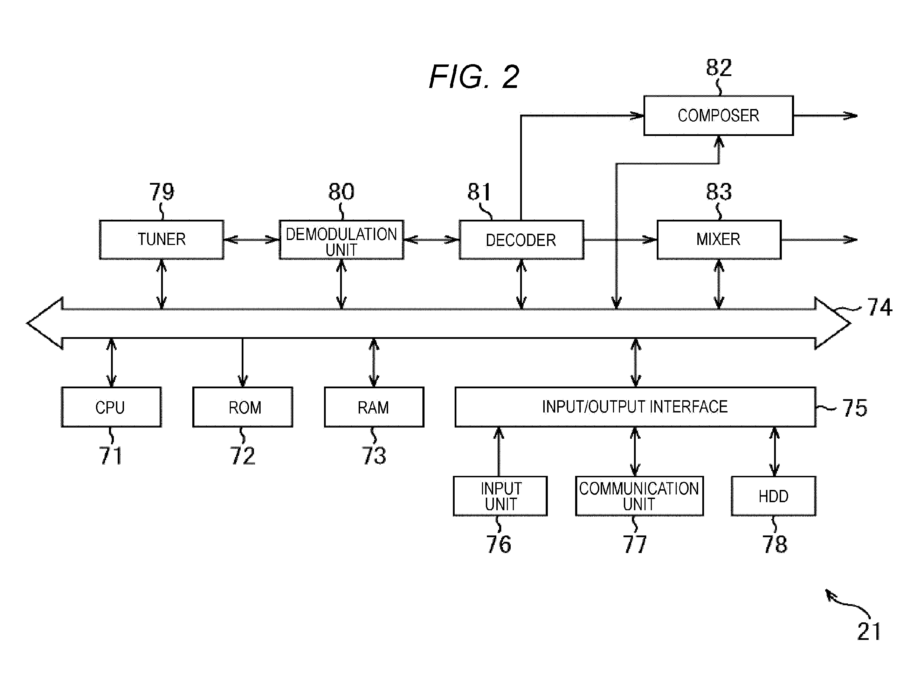

The device 21 is configured as a television receiver, for example. Fig. 2 is a block diagram illustrating a configuration example of the device 21 of Fig. 1.

A CPU 71 is a main controller that controls an operation of the whole device 21, and controls a tuner 79, a demodulation unit 80, a decoder 81, an HDD 78, and the like based on an input signal supplied from an input unit 76 to execute recording or reproducing of a TV program.

A RAM 73 is a writable volatile memory used for loading an execution program of the CPU 71, and for writing work data of the execution program. A ROM 72 is a read-only memory that stores a self-diagnosis/initialization program executed at power on of the device 21, a control code for hardware operation, and the like.

The input unit 76 is configured from, for example, a remote commander (remote controller), a button, a switch, a keyboard, and the like, and outputs an input signal corresponding to an operation to the CPU 71 through an input/output interface 75 and a bus 74.

A communication unit 77 communicates with another information processing apparatus as necessary, for example, through a network.

The HDD 78 is a randomly accessible storage device capable of accumulating a program, data, and the like in a file type having a predetermined format. The HDD 78 is connected to the bus 74 through the input/output interface 75, receives data for data broadcasting such as a broadcast program and EPG data from the decoder 81 and the communication unit 77, records the information, and outputs the recorded data, as necessary.

A broadcast wave received by an antenna (not illustrated) is supplied to the tuner 79. The broadcast wave is based on a predetermined format, and may include the EPG data. Differences of a satellite broadcasting wave, a ground wave, a wired or wireless wave are not especially considered for the broadcast wave.

The tuner 79 performs tuning of the broadcast wave of a predetermined channel, that is, channel selection, based on the control of the CPU 71, and outputs received data to the demodulation unit 80. Note that the configuration of the tuner 79 can be appropriately changed or extended according to whether the transmitted broadcast wave is analog data or digital data. The demodulation unit 80 demodulates the digitally modulated received data, and outputs the demodulated data to the decoder 81.

For example, in the case of digital broadcasting, the digital data received by the tuner 79 and demodulated by the demodulation unit 80 is AV data compressed in a predetermined system such as MPEG2 (Moving Picture Experts Group 2) system, and is a transport stream in which the data for data broadcasting is multiplexed. The former AV data is video data and audio data that configure the main body of the broadcast program, and the latter data for data broadcasting includes data accompanying the main body of the broadcast program (for example, the EPG data).

The decoder 81 separates the transport stream supplied from the demodulation unit 80 into, for example, the AV data compressed in the MPEG system and the data for data broadcasting. The separated data for data broadcasting is supplied to the HDD 78 through the bus 74 and the input/output interface 75, and is recorded in the HDD 78.

When it is instructed that a received TV program is output as is, the decoder 81 further separates the AV data into compressed video data and compressed audio data. The separated audio data is decoded, and is then output to a speaker of the television receiver 12 through a mixer 83. Further, the separated video data is expanded, and is then output to a monitor of the television receiver 12 through a composer 82.

When it is instructed that the received TV program be recorded in the HDD 78, the decoder 81 outputs the AV data before separation to the HDD 78 through the bus 74 and the input/output interface 75. When it is instructed that the TV program recorded in the HDD 78 is reproduced, the decoder 81 receives an input of the AV data from the HDD 78 through the input/output interface 75 and the bus 74, separates the data into compressed video data and compressed audio data, and outputs the data to the composer 82 and the mixer 83, respectively.

The composer 82 composes the video data input from the decoder 81 and a GUI (graphic user interface) screen, as necessary, and outputs the composed data to the monitor of the television receiver 12.

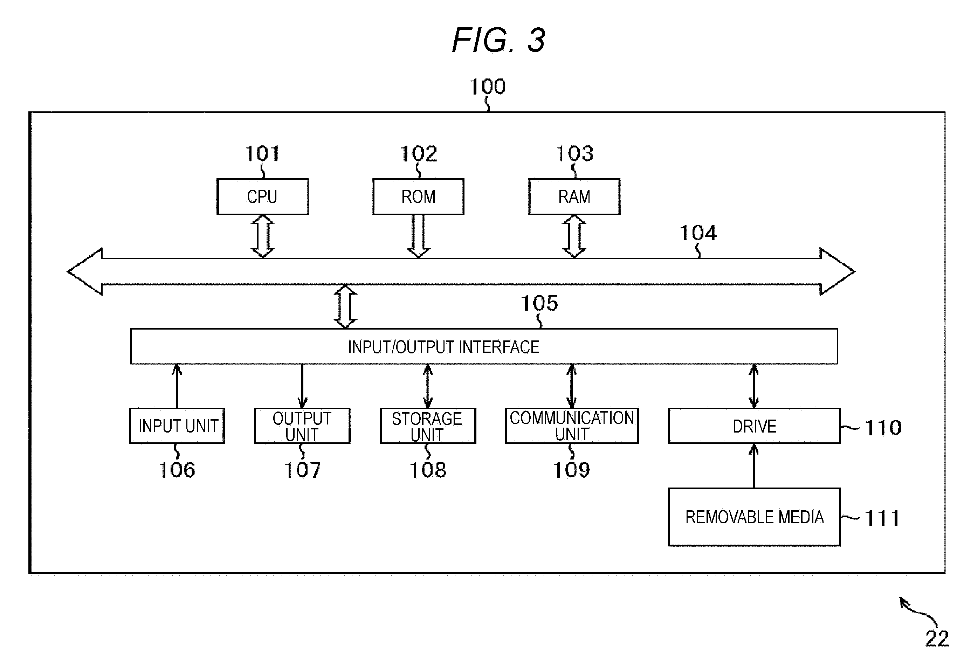

The devices 22 to 25 of Fig. 1 are configured from mobile terminals, such as so-called smart phones. Fig. 3 is a block diagram illustrating a configuration example of the device 22 of Fig. 1.

In Fig. 3, a CPU (Central Processing Unit) 101 executes various types of processing according to a program stored in a ROM (Read Only Memory) 102 or a program loaded into a RAM (Random Access Memory) 103 from a storage unit 108. Further, data and the like necessary for the CPU 101 to execute various types of processing are also appropriately stored in the RAM 103.

The CPU 101, the ROM 102, and the RAM 103 are connected with each other through a bus 104. An input/output interface 105 is also connected to the bus 104.

An input unit 106 including a keyboard, a mouse, and the like, an output unit 107 including a display including a LCD (Liquid Crystal display) and a speaker and the like, the storage unit 108 configured from a hard disk, and the like, and a communication unit 109 configured from a network interface card, such as a modem, a LAN card, and the like, are connected to the input/output interface 105. The communication unit 109 performs communication processing through a network including the Internet.

A drive 110 is connected to the input/output interface 105, as necessary, and a removable media 111, such as a magnetic disk, an optical disk, a magneto-optical disk, or a semiconductor memory is, is appropriately mounted thereto. A computer program read out from the removable media 111 is installed into the storage unit 108, as necessary.

When a series of processing is executed by software, programs that configure the software are installed from the network, such as the internet, or from a recording medium configured from the removable media 111.

Note that the recording medium is configured from the removable media 111 includingamagneticdisk (includingafloppydisk (registered trademark)), an optical disk (including a CD-ROM (Compact Disk-Read Only Memory) and a DVD (Digital Versatile Disk)), a magneto-optical disk (including a MD (Mini-Disk) (registered trademark)), a semiconductor memory, and the like.

While it has been described here that Fig. 3 is a configuration example of the device 22, configurations of the devices 23 to 25 are similar to the one illustrated in Fig. 3. Therefore, the configuration of Fig. 3 will be appropriately applied.

Note that it has been described, in the above description, the devices 21 to 25 are configured from a television receiver, a smart phone, and the like, for example. However, the devices are not limited to these examples. For example, the devices 21 to 25 may be configured from a personal computer, a mobile telephone, and other electronic devices.

RD-Agent described below is incorporated into the devices 21 to device 25. Further, RD-App that is an application program executing various types of processing using a function of the RD-Agent is installed into the devices 21 to 25, as necessary. The RD-App is executed in the devices 21 to 25, so that a service executed in a plurality of devices in cooperation with each other can be provided. For example, an online game and the like can be executed in the devices 21 to 25 in cooperation with each other.

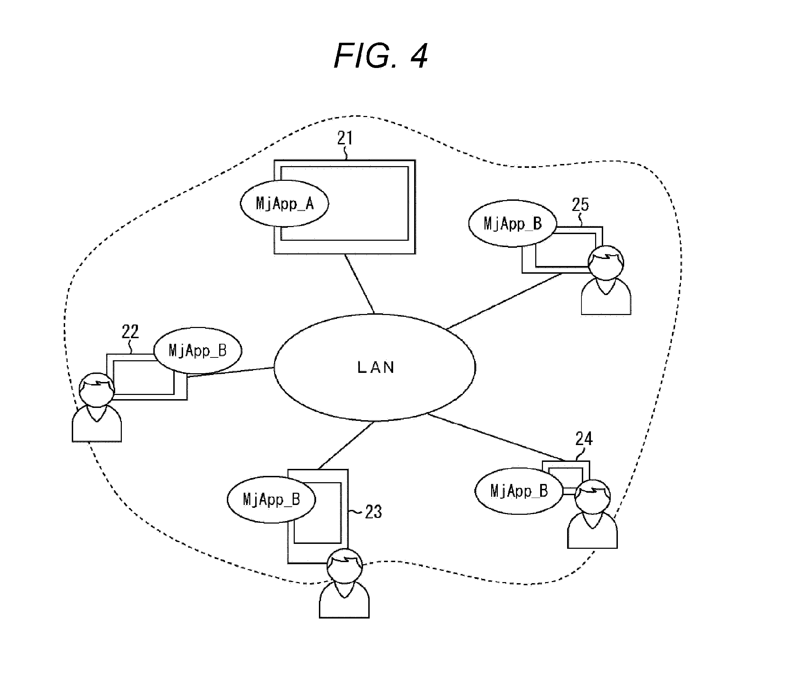

Fig. 4 is a diagram describing a mah-jong game that is one of services executed in a plurality of devices in cooperation with each other. The mah-jong game is a game in which mah-jong is enjoyed as an online game, and, usually, four users participate in and play the game. The four users operate respective mobile terminals to play the game while looking at a round (a mah-jong table) displayed on a display of one television receiver.

In the example of Fig. 4, the users of the devices 22 to 25 participate in the mah-jong game. MjApp_B that is an application program for players is incorporated in the devices 22 to 25. The MjApp_B is a program configured as the above-described RD-App and in which various types of control concerning the mobile terminals (that is, the devices 22 to 25) respectively operated by the four users in the mah-jong game are described.

For example, the MjApp_B is executed in the devices 22 to 25, so that tiles at hand of respective users are displayed on the displays of the respective devices. In addition, the MjApp_B is executed in the devices 22 to 25, so that various commands required in the game (for example, a command of discarding tiles, commands corresponding to pung, chow(chi), and riichi, and the like) can be executed, and the game proceeds by communication with other devices being performed, as necessary.

Further, MjApp_A that is an application program for mah-jong table is incorporated in the device 21. The MjApp_A is a program configured as the above-described RD-App, and in which various types of control concerning the television receiver (that is, the device 21) that displays a screen of the mah-jong table in the mah-jong game are described.

For example, the MjApp_A is executed in the device 21, so that images of wall tiles and discarded tiles are displayed on the display, and the communication with other devices is performed, so that the images are successively updated.

In this way, the service of the mah-jong game is provided.

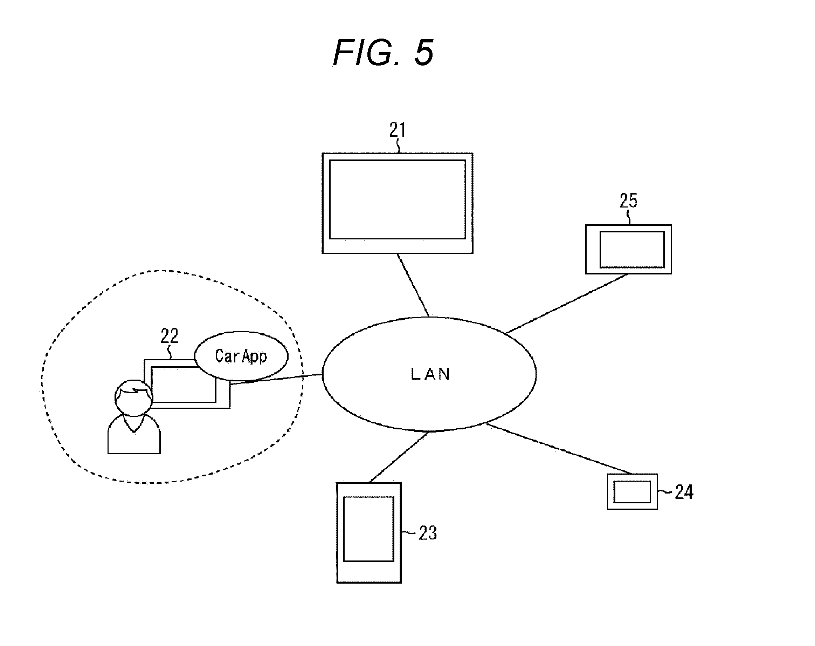

Fig. 5 is a diagram describing a car race game that is another service. The car race game is an online game that can be enjoyed alone or by a plurality of people, for example. The user can feel atmosphere of a race while looking at the screen displayed on the display of the own mobile terminal.

In the example of Fig. 5, the user of the device 22 participates in the car race game. CarApp that is an application program is incorporated in the device 22. The CarApp is a program configured as the above-described RD-App, and in which various types of control concerning the mobile terminal (that is, the device 22) operated by the user in the car race game are described.

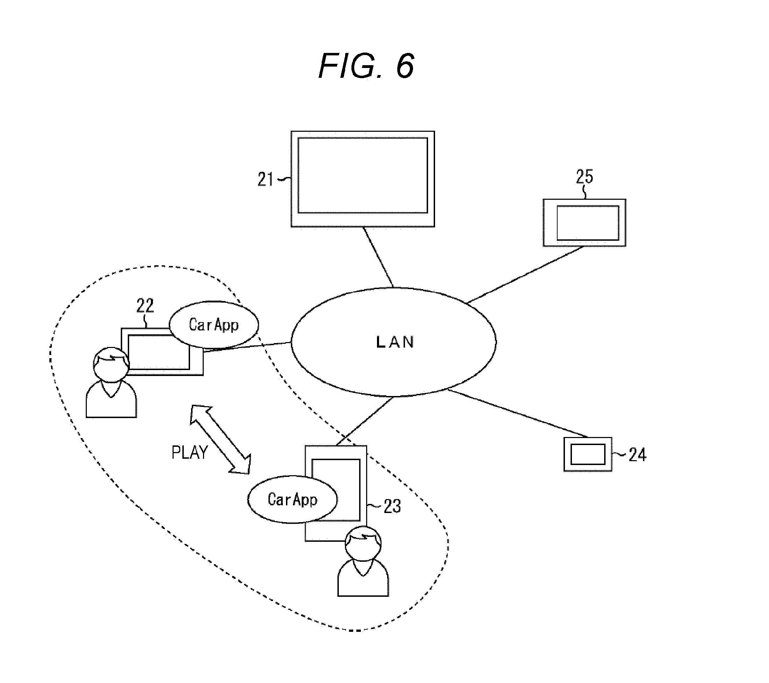

For example, the CarApp is executed by the device 22, so that an image of a circuit and a car operated by the user of the device 22 are displayed. In addition, as illustrated in Fig. 6, for example, when the devices 22 and 23 participate in the car race game, an image of a car operated by the user of the device 23 is also displayed on the display of the device 22. Similarly, the image of the car operated by the user of the device 22 is displayed on the display of the device 23. In the example of Fig. 6, the CarApp is also incorporated in the device 23, and a play (a car race) is performed between the users of the devices 22 and 23.

Further, the CarApp is executed in the devices 22 and 23, so that various commands required for the game (for example, commands corresponding to a handle operation, an accelerator, a brake, and the like) can be executed, and communication with other devices is performed, as necessary, so that the game proceeds.

In this way, the service of the car race game is provided.

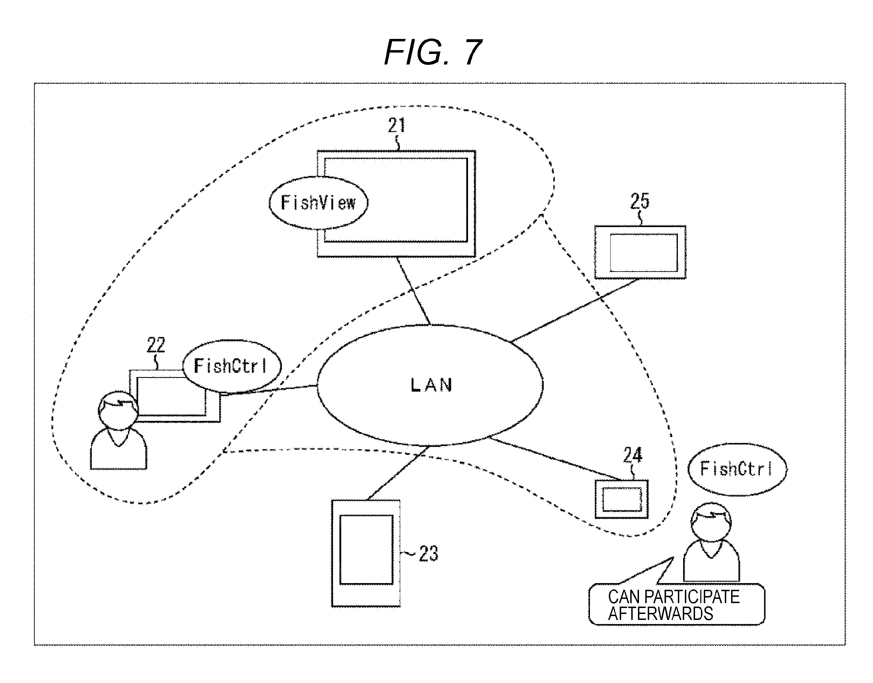

Fig. 7 is a diagram describing a fishing game that is still another service. The fishing game is an online game that can be enjoyed alone or by a plurality of people. The user can feel atmosphere of pulling fish by operating the own mobile terminal while looking at images such as a pond and the sea displayed at the television receiver.

In the example of Fig. 7, the user of the device 22 participates in the fishing game. FishCtrl that is an application program for players is incorporated in the device 22. The FishCtrl is a program configured as the above-described RD-App, and in which various types of control concerning the mobile terminal (that is, the device 22) operated by the user in the fishing game is described. Note that the user of the device 24 can participate in the fishing game afterwards by installing the FishCtrl into the device 24.

For example, the FishCtrl is executed in the device 22 or 24, so that a fishing rod and a reel are displayed on the display of each device. Further, the FishCtrl is executed in the device 22 or 24, so that various commands required for the game (for example, a command of pulling out a rod and commands corresponding to rolling up and unreeling a fishing line) can be executed, and communication with other devices is performed, as necessary, so that the game proceeds.

Further, FishView that is an application program for fishing spots is incorporated in the device 21. The FishView is a program configured as the above-described RD-App, and in which various types of control concerning the television receiver (that is, the device 21) that displays screens of the sea, ponds, fishing spots, the fish, and the like in the fishing game are described.

For example, the FishView is executed in the device 21, so that images of the sea and the fish are displayed on the display, and communication with other devices is performed, so that the images are successively updated.

In this way, the service of the fishing game is provided.

Other than the above-described games, services, such as a fighting game in which characters of the users fight with each other, a roll playing game, and the like, are provided.

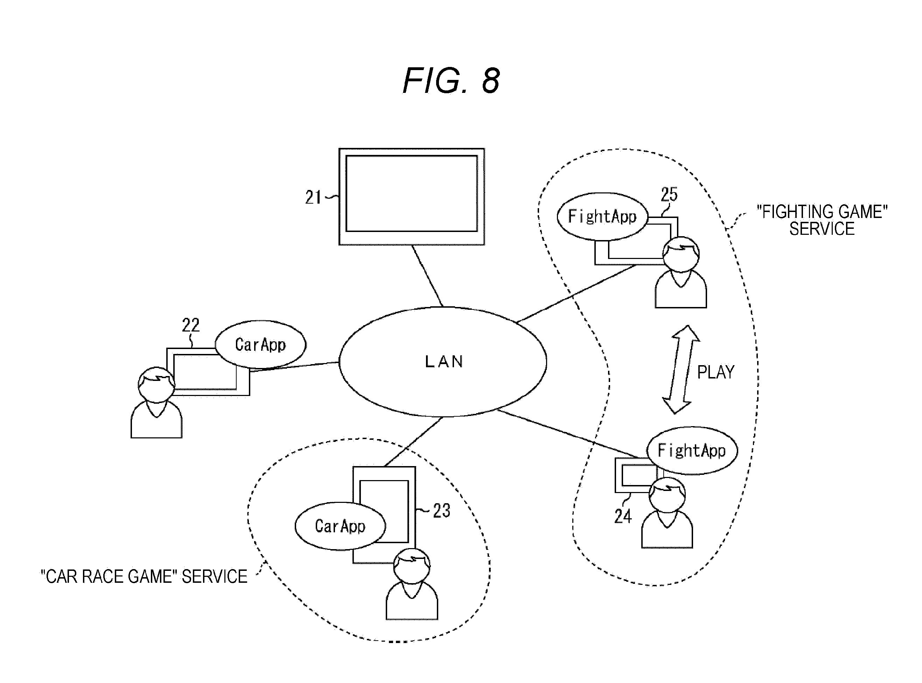

Fig. 8 is a diagram describing an example in which a plurality of services is provided in the same LAN. In this example, a service of a car race game and a service of a fighting game are provided.

The CarApp is executed in the device 23, and the user of the device 23 participates in the car race game. Note that, while the CarApp is incorporated in the device 22, assume that the CarApp has not been executed.

The users of the devices 24 and 25 participate in a fighting game.

FightApp is incorporated in the devices 24 and 25, and the users of the devices 24 and 25 play in the fighting game. Note that the FightApp is a program configured as the above-described RD-App, and in which various types of control concerning the mobile terminals operated by the users in the fighting game are described.

For example, when the device 22 is activated, the fact of the activation is notified to the device 23, and data for prompting initiation of the CarApp is transmitted to the device 22 by the application program (CarApp) of the device 23. Further, when the device 22 is activated, the fact of the activation is notified to the devices 24 and 25, and data for prompting installation and execution of the FightApp is transmitted to the device 22 by the application program (FightApp) of the device 24.

That is, a device that has already participated in some sort of service transmits data for prompting participation to the service to a device newly connected to the LAN. Note that, when a plurality of users participates in one service, a device of a predetermined representative user transmits the data of prompting participation to the service.

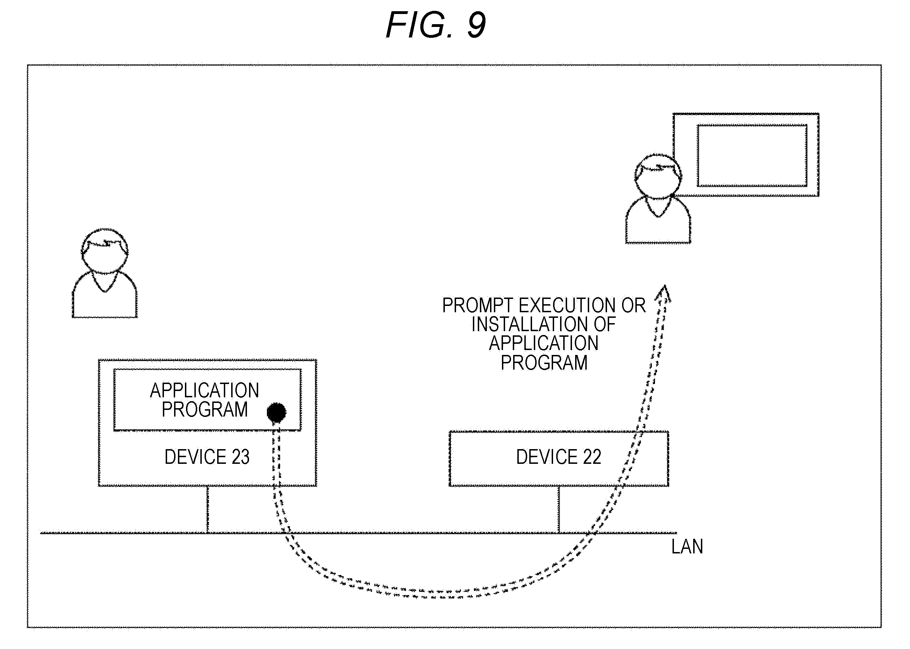

For example, as illustrated in Fig. 9, the device (device 23) having already initiated the application program in the LAN transmits the data for prompting execution (or installation) of the application program to the device 22.

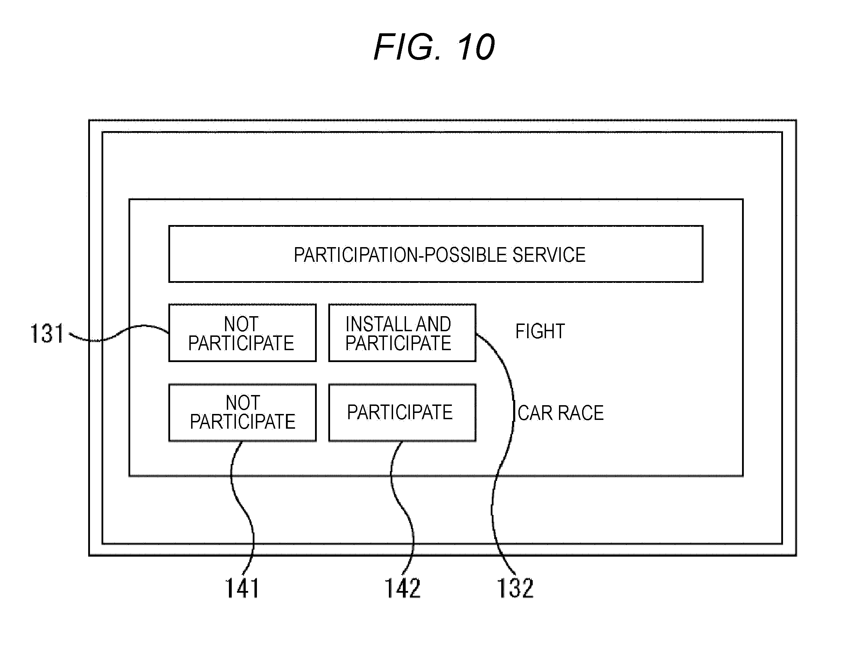

For example, when the data for prompting execution (or installation) of the application program is transmitted from the devices 23 and 24 to the device 22, a screen like the one illustrated in Fig. 10 is displayed on the display of the device 22.

In the example of the screen of Fig. 10, a dialog of "participation-possible service" is displayed. In this screen (GUI), when the user presses (selects) a button 132, the FightApp is installed into the device 22 and is executed. That is, the user of the device 22 participates in the service of the fighting game.

Meanwhile, in the screen of Fig. 10, when the user presses (selects) a button 131, the FightApp is not installed into the device 22. That is, the user of the device 22 does not participate in the service of the fighting game.

In the screen of Fig. 10, when the user presses (selects) a button 142, the CarApp is executed in the device 22. That is, the user of the device 22 participates in the service of the car race game.

Meanwhile, in the screen of Fig. 10, when the user presses (selects) a button 141, the CarApp is not executed in the device 22. That is, the user of the device 22 does not participate in the service of the car race game.

Note that, here, an example has been described, in which a screen (GUI) as illustrated in Fig. 10 is displayed, and participation and non-participation to the service is selected. However, the participation or non-participation to the service may be selected by another system. For example, when each device has an audio recognition function, the participation or non-participation to the service may be selected by recognizing a voice of the user.

As described above, the devices 21 to 25 incorporates the RD-Agent therein. The RD-Agent is software that is a base for constructing a system, and is operated regardless of OS of the devices 21 to 25. The RD-Agent automatically performs communication with the RD-Agent incorporated in other devices, for example, provides various types of information to the RD-Agent of other services, and acquires various types of information from the RD-Agent of other devices.

The RD-App executed in the devices 21 to 25 is described using RD-Library. The RD-Library is a library for calling a function of the RD-Agent from the RD-App.

The RD-Library provides an API for executing the function of the RD-Agent as one like the following functions.

For example, the function "RD_init()" is a function used when initializing information concerning service information and notifying the own service information to the RD-Agent of other devices. Note that the service information will be described below.

Further, the function "RD_getinfo()" is a function used when acquiring RD device information of other services connected to the LAN. Note that the RD device information will be described below.

Further, the function "RD_getsvinfo()" is a function used when acquiring service information of a service in which the other devices connected to the LAN participate.

Further, the function "RD_request()" is a function used when requiring other devices to perform installation or execution of predetermined RD-App.

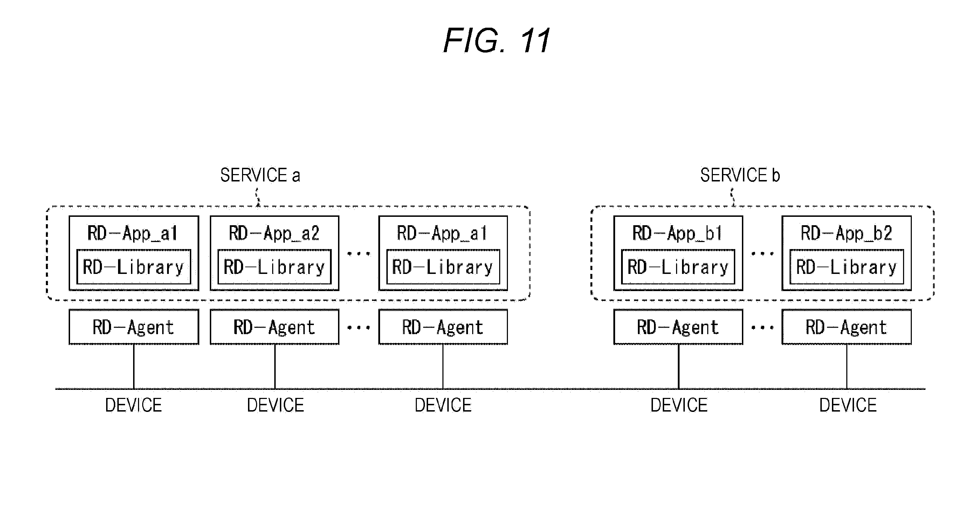

For example, as illustrated in Fig. 11, the RD-Agent and the RD-App are executed in each device, the RD-App is described using the RD-Library, and the function of the RD-Agent is called by the RD-Library. Then, for example, a service a is provided, to which a plurality of devices having RD-App_a1 and RD-App_a2 in execution participates, and a service b is provided, to which a plurality of devices having RD-App_b1 and RD-App_b2 in execution participates.

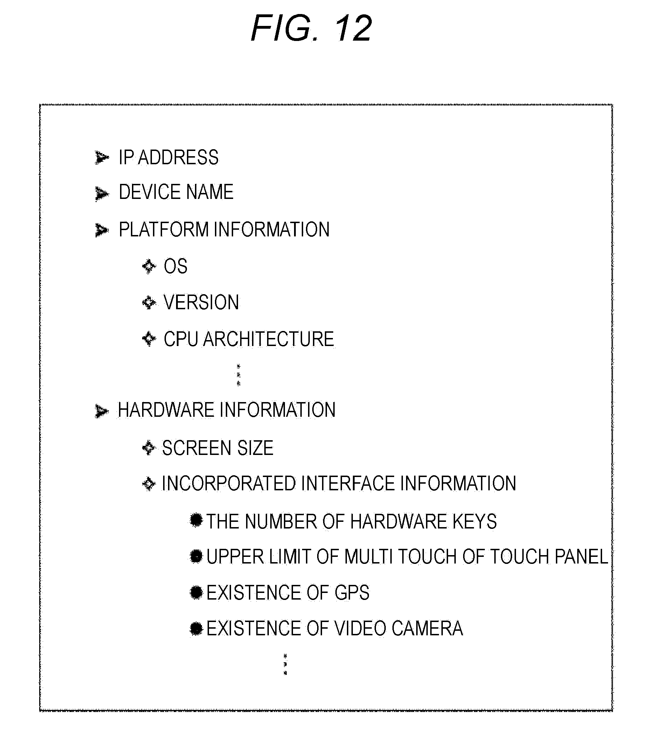

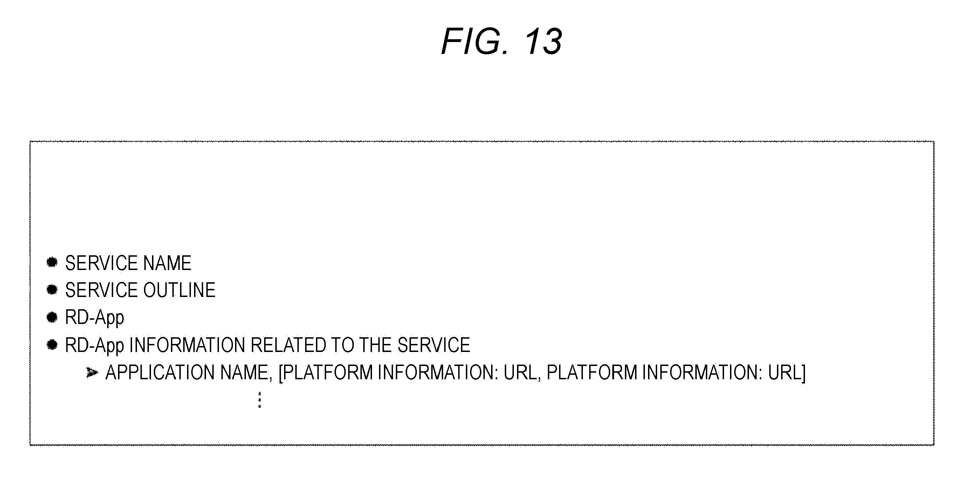

The RD-Agent provides the RD-Agent of other devices with information like the one illustrated in Figs. 12 and 13.

Fig. 12 is a diagram illustrating an example of the RD device information. The RD device information is unique information concerning the devices 21 and 22, for example.

In the example of Fig. 12, an "IP address", a "device name", "platform information", "hardware information", and the like are included in the RD device information. The "platform information" includes, for example, OS of the device in which the RD-Agent is incorporated, a version of the OS, CPU architecture, and the like. Other than the above, information such as a Class name of Java (registered trademark) and a file pass of Windows (registered trademark) may be included in the "platform information".

The "hardware information" of Fig. 12 includes, for example, a "screen size" of the device in which the RD-Agent is incorporated, "incorporated interface information", and the like. The "incorporated interface information" includes information such as the number of hardware keys, an upper limit of multi touch of a touch panel, the existence of a GPS, the existence of a video camera, and the like.

Fig. 13 is a diagram illustrating an example of the service information. The service information is information concerning the RD-App executed in the device in which the RD-Agent is incorporated.

In the example of Fig. 13, a "service name (for example, a mah-jong game) ", a "service outline (in which game content and the like are described, for example)", the "RD-App", "RD-App information related to the service", and the like are included in the service information.

The "RD-App information related to the service" is, for example, a region in which information concerning various types of RD-App used for the service of the mah-jong game is described, and the name of the application (RD-App) is described. For example, in the case of the service of the mah-jong game, the MjApp_A and the MjApp_B are described as the names of the application. URL of each RD-App specified by the name of each application according to the platform information of the device is described.

For example, URL_A is described as URL for downloading the RD-App to be installed in a device of the version 1, having OS made by a company A. Further, URL_B is described as URL for downloading the RD-App to be installed in a device of the version 2, having OS made by a company A. In this way, the URL according to the platform information of each device is described in the "RD-App information related to the service".

For example, in the example of Fig. 8, when the RD-Agent of the device 22 is executed, the RD-Agent of the device 22 transmits the own RD device information to the devices 21, 23 to 25. Accordingly, the RD-Agent of the device 21, 23 to 25 recognize the existence of the RD-Agent of the device 22. Further, the device information is transmitted from each RD-Agent of the devices 21, 23 to 25 to the device 22. Accordingly, the RD-Agent of the device 22 recognizes the existence of the RD-Agent of the devices 21, 23 to 25.

Then, the RD-Agent of the device 23 checks the device information of the device 22, and determines whether the device 22 can participate in the service of the car race game. When the device 22 can participate in the service of the car race game, the RD-Agent of the device 23 transmits the service information to the device 22. Similarly, the RD-Agent of the device 24 checks the device information of the device 22, and determines whether the device 22 can participate in the service of the fighting game. When the device 22 can participate in the service of the fighting game, the RD-Agent of the device 24 transmits the service information to the device 22.

Here, the service information transmitted from the devices 23 and 24 to the device 22 is, for example, configured as packet data in a predetermined format, and is transmitted as data for prompting the users of other devices to participate in the service (participation asking data).

Accordingly, a screen as described above with reference to Fig. 10 is displayed on the display of the device 22. For example, when the user of the device 22 presses the button 132 of Fig. 10, the RD-Agent of the device 22 checks the "RD-App information related to the service" in the service information, and acquires the URL according to the platform information of the device in which the RD-Agent itself is operated. Then, the RD-Agent of the device 22 downloads the RD-App based on the URL, and installs and executes the RD-App. In this way, the user of the device 22 can participate in the service of the fighting game by simply pressing the button 132.

As described above, according to the present technology, when there is a plurality of services (for example, online games) provided on the LAN, for example, the user can arbitrary select which service he/she's going to participate.

Alternatively, assuming that, in the example of Fig. 8, the RD-Agent of the device 22 is executed, the screen of the Fig. 10 is displayed, and the buttons 131 and 141 are pressed. Note that, when the RD-Agent of the device 22 is executed, the RD-Agent of the device 22 transmits the own RD device information to the devices 21, 23 to 25, and the RD-Agent of the devices 21, 23 to 25 respectively transmit the own device information to the device 22.

Further, when the FishCtrl is executed in the device 22, the RD-Agent of the device 22 transmits the service information.

At this time, for example, the RD-Agent of the device 22 checks the device information of the devices, and determines whether the devices can participate in the service of the fishing game. For example, when the devices 24 and 25 can participate in the service of the fishing game, the RD-Agent of the device 22 transmits the service information to the devices 24 and 25. Here, the service information transmitted from the device 22 to the devices 24 and 25 is also configured as packet data in a predetermined format, for example, and is transmitted as data for prompting the users of other devices to participate in the service (participation asking data).

Accordingly, a GUI that prompts the participation to the service of the fishing game is displayed on the displays of the devices 24 and 25.

In this way, according to the present technology, a user of a device connected to the network later can invite a user who has already participated in some sort of service to participate in a service that the later connected user desires.

In addition, as described above, according to the present technology, the application program and the like required for various services can be easily installed and executed. For example, the time and effort such as the user checking the version of the application program and installing the program each time, like the past technologies, can be omitted. Further, for example, the developer of the application program can easily design the processing performed in cooperation with the application programs executed in other devices.

Therefore, according to the present technology, a number of variations in functions can be realized using a plurality of devices connected to the network.

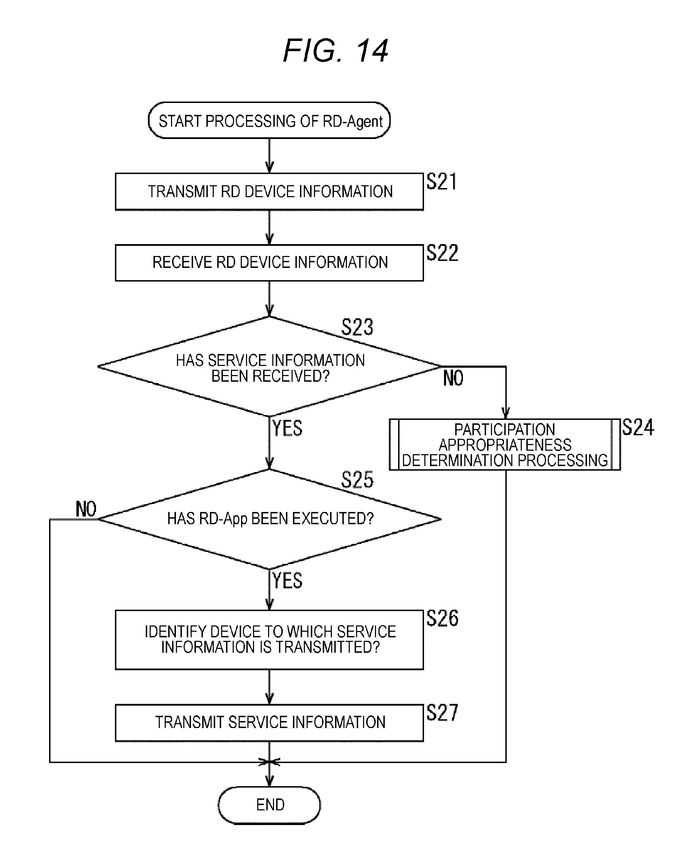

Fig. 14 is a flowchart describing processing of the RD-Agent. This processing is executed when the devices 21 to 25 are activated, and the RD-Agent is executed.

In step S21, the RD-Agent transmits the RD device information of the device in which the RD-Agent itself is incorporated to other devices connected to the LAN.

In step S22, the RD-Agent receives the RD device information of other devices connected to the LAN.

In step S23, the RD-Agent determines whether the service information has been received from other devices. In step S23, when it is determined that the service information has not been received from other devices, the processing proceeds to step S25.

That is, when no invitation of participation to a service has been given from the users of other devices, the RD-Agent prompts other devices to participate in a service that the RD-Agent itself desires (a service corresponding to the RD-App to be executed afterwards).

In step S25, the RD-Agent determines whether the RD-App has been executed in the device in which the RD-Agent itself is incorporated. In step S25, when it is determined that the RD-App has been executed, the processing proceeds to step S26.

In step S26, the RD-Agent identifies a device to which the service information is to be transmitted based on the RD device information of other devices received in the processing in step S22. At this time, for example, a device to which the service information is to be transmitted is identified based on the information described in the "platform information" and the "hardware information" of Fig. 12.

Alternatively, a device to which the service information is to be transmitted may be identified based on a setting file. For example, whether participation to a service is prompted according to the transmitted RD device information and service information is described in the setting file previously stored in the device in which the RD-Agent is incorporated. For example, a device having the IP address of AAAA is set not to prompt participation to a OO service. In this case, a device to which the participation is prompted becomes identified according to the type of service.

In step S27, the RD-Agent transmits the service information to the device identified in the processing of step S26.

Note that the processing of steps S26 and S27 is executed by the RD-App controlling the function of the RD-Agent using the RD-Library.

Meanwhile, in step S23, when it is determined that the service information has been received from other devices, the processing proceeds to step S24. In step S24, the RD-Agent executes participation appropriateness determination processing described below with reference to Fig. 5.

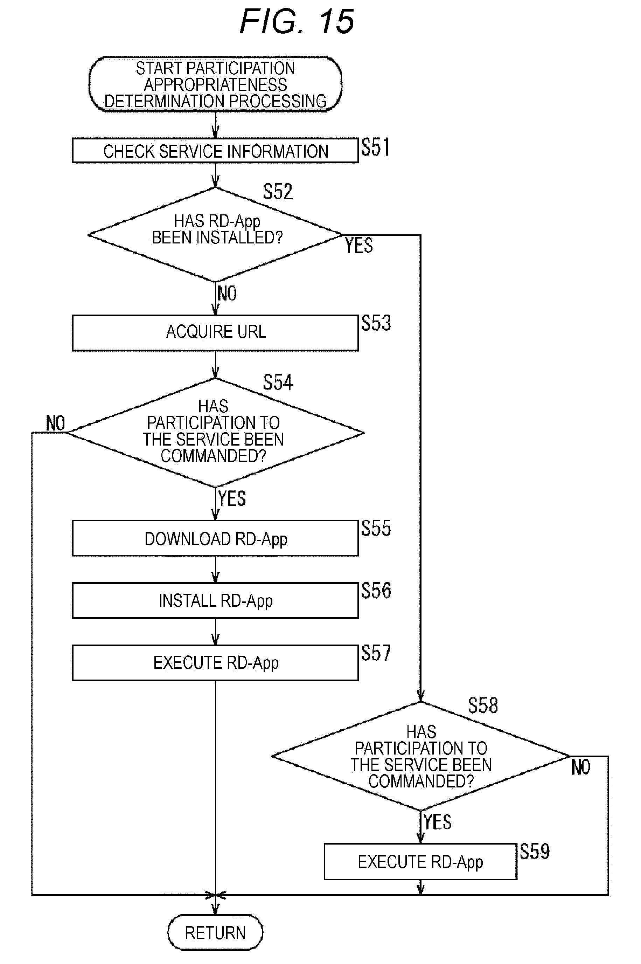

Here, a detailed example of the participation appropriateness determination processing of step S24 of Fig. 14 will be described with reference to the flowchart of Fig. 15.

In step S51, the RD-Agent checks the service information that has been determined to be received in step S23.

In step S52, the RD-Agent determines whether the RD-App has been installed.

At this time, for example, the RD-App required for participating in the service is identified based on the "RD-App information related to the service" of Fig. 13, and whether the RD-App has been installed (whether already been incorporated) in the device in which the RD-Agent itself is incorporated is determined.

In step S52, when it is determined that the RD-App has not been installed, the processing proceeds to step S53.

In step S53, the RD-Agent acquires URL for downloading the RD-App. At this time, for example, the "RD-App information related to the service" in the service information is searched and the URL is identified based on the information described in the "platform information" and the "hardware information" of the RD device information of the device in which the RD-Agent itself is incorporated.

In step S54, the RD-Agent determines whether participation to a service corresponding to the service information that has been determined to be received in step S23 has been commanded. In step S54, when it is determined that the participation to the service has been commanded, the processing proceeds to step S55.

For example, a screen like the one illustrated in Fig. 10 is displayed on the display of the device in which the RD-Agent is incorporated, and when the buttons 132 and 142 are selected, it is determined that the participation to the service has been commanded. Meanwhile, when the screen like the one illustrated in Fig. 10 is displayed and the buttons 131 and 141 are selected, it is determined that the participation to the service has not been commanded.

Alternatively, whether the participation to the service has been commanded may be determined based on a setting file. For example, appropriateness of the participation is described in the setting file previously stored in the device in which the RD-Agent is incorporated according to the transmitted RD device information, service information, and the like.

For example, when an invitation to a service of a car race game is given, it is set that the invitation is always rejected. When an invitation to a service of a fighting gage is given, and it is set to always participate in the service. In this case, participation to the service of a fighting game is commanded without displaying a screen like the one illustrated in Fig. 10. In the example of Fig. 8, the FightApp is installed and executed in the device 22, and the user of the device 22 participates in the service of the fighting game.

Further, for example, when an invitation of participation to a service is given by the device having the IP address of AAAA, it is set to always participate in the service, and when an invitation of participation to a service is given by the device having the IP address of BBBB, it is set that the invitation is always rejected. For example, when an invitation of participation to a service is given by the device 23, it is set that the invitation is always rejected, and when an invitation of participation to a service is given by the device 24, it is set to always participate in the service. In this case, for example, the participation to the service to a fighting game is commanded without displaying a screen like the one illustrated in Fig. 10. In the example of Fig. 8, the FightApp is installed and executed in the device 22, and the user of the device 22 participate in the service of the fighting game.

In step S55, the RD-Agent downloads the RD-App based on the URL acquired in the processing in step S53.

In step S56, the RD-Agent installs the RD-App downloaded in the processing in step S55 to the device in which the RD-Agent itself is incorporated.

In step S57, the RD-Agent executes the RD-App installed in step S56.

Meanwhile, in step S54, it is determined that the participation to the service has not been commanded, the processing of steps S55 to S57 is skipped.

Further, in step S52, it is determined that the RD-App has been installed, the processing proceeds to step S58.

In step S58, the RD-Agent determines whether participation to a service corresponding to the service information that has been determined to be received in step S23 has been commanded.

For example, when a screen like the one illustrated in Fig. 10 is displayed on the display of the device in which the RD-Agent is incorporated, and the buttons 132 and 142 are selected, it is determined that the participation to the service has been commanded. Meanwhile, when a screen like the one illustrated in Fig. 10 is displayed, and the buttons 131 and 141 are selected, it is determined that the participation to the service has not been commanded.

Alternatively, whether the participation to the service has been commanded may be determined based on a setting file. For example, appropriateness of participation may be described in the setting file previously stored in the device in which the RD-Agent is incorporated according to the transmitted RD device information, service information, and the like.

In step S58, when it is determined that the participation to the service has been commanded, the processing proceeds to step S59.

In step S59, the RD-Agent executes the RD-App installed in advance.

Meanwhile, in step S58, when it is determined that the participation to the service has not been commanded, the processing of step S59 is skipped.

After the processing of step S57 or S59, the participation appropriateness determination processing ends. Accordingly, the processing of the RD-Agent of Fig. 14 ends.

Note that, when it is determined that the participation to the service has not been commanded in step S54, or when it is determined the participation to the service has not been commanded in step S58, the processing may proceeds to step S25 of Fig. 14.

That is, when all of the participation to the services from the users of other devices are rejected, participation to a service may be prompted from the RD-Agent itself to the users of other devices.

In this way, the processing of the RD-Agent is executed.

In the above description, an example has been described, in which devices incorporates the RD-Agent therein are connected on the LAN. However, for example, the devices may be connected through a WAN, so that a VLAN (Virtual LAN) may be configured.

Note that the series of processing described in the present specification includes not only the processing performed along the described order in a time series manner, but also the processing executed individually or in parallel, even if the processing is not necessarily performed in a time series manner.

Further, an embodiment of the present technology is not limited to the above-described embodiments, and various modifications can be made without departing from the gist of the present technology.

Note that the present technology may employ the following configurations.

(1) An information processing apparatus including:
   a device information transmission unit configured to transmit device information to another information processing apparatus connected to a network;
   a participation asking data reception determination unit configured to determine whether participation asking data has been received, the participation asking data being data to be transmitted based on the device information by the another information processing apparatus having received the device information, and prompting participation to a service concerning processing of an application program being executed by the another information processing apparatus; and
   an execution determination unit configured to determine whether either execution of an application program for participating in the service, or installation and execution of the application program for participating in the service when it is determined that the participation asking data has been received.
(2) The information processing apparatus according to (1), wherein, when it is determined that a plurality of the participation asking data respectively prompting participation to a plurality of services has been received,
   the execution determination unit
   performs notification of allowing a user to determine appropriateness of the participation to each of the plurality of services, and
   determines whether either execution of an application program for participating in the service or installation and execution of the application program for participating in the service based on selection by the user.
(3) The information processing apparatus according to (1), wherein, when it is determined that a plurality of the participation asking data respectively prompting participation to a plurality of services has been received,
   the execution determination unit
   determines whether either execution of an application program for participating in the services, or execution and installation of the application program for participating in the services based on description of a setting file stored in advance.
(4) The information processing apparatus according to (1), further including:
   a device information reception unit configured to receive device information of the another information processing apparatus transmitted from the another information processing apparatus through the network,
   wherein, when it is determined that the participation asking data has not been received, and
   when an application program incorporated in the information processing apparatus itself is executed,
   the information processing apparatus transmits, to the another information processing apparatus, participation asking data prompting participation to a service concerning processing of the executed application program, based on the received device information of the another information processing apparatus.
(5) The information processing apparatus according to (1), further including:
   a device information reception unit configured to receive device information of the another information processing apparatus transmitted from the another information processing apparatus through the network,
   wherein, when determination of not performing the execution of an application program for participating in the service, or the installation and execution of the application program for participating in the service has been made, and
   when an application program incorporated in the information processing apparatus itself is executed,
   the information processing apparatus transmits, to the another information processing apparatus, participation asking data prompting participation to a service concerning processing of the executed application program, based on the received device information of the another information processing apparatus.
(6) The information processing apparatus according to (1), wherein, when determination of performing the execution of an application program for participating in the service has been made by the execution determination unit,
   the information processing apparatus executes the application program specified based on information described in the participation asking data.
(7) The information processing apparatus according to (1), wherein, when determination of performing the installation and execution of the application program for participating in the service has been made by the execution determination unit,
   the information processing apparatus downloads and installs the application program based on URL described in the participation asking data, and execute the installed application program.
(8) The information processing apparatus according to (1), wherein processing by the application program is realized using a function of an agent program incorporated in each of the information processing apparatus itself and the another information processing apparatus.
(9) The information processing apparatus according to (1), wherein, when it is determined that a plurality of the participation asking data respectively prompting participation to a plurality of services has been received,
   the execution determination unit
   displays a GUI allowing a user to determine appropriateness of the participation to each of the plurality of services.
(10) The information processing apparatus according to (1), wherein the device information transmission unit
   transmits device information including a communication address in the network, a type of OS, and information concerning hardware to the another information processing apparatus connected to the network.
(11) An information processing method including the steps of:
   transmitting device information to another information processing apparatus connected to a network by a device information transmission unit;
   determining, by a participation asking data reception determination unit, whether participation asking data has been received, the participation asking data being data to be transmitted based on the device information by the another information processing apparatus having received the device information, and prompting participation to a service concerning processing of an application program being executed by the another information processing apparatus, and
   determining, by an execution determination unit, whether either execution of an application program for participating in the service, or installation and execution of the application program for participating in the service when it is determined that the participation asking data has been received.
(12) A program for causing a computer to function as:
   a device information transmission unit configured to transmit device information to another information processing apparatus connected to a network;
   a participation asking data reception determination unit configured to determine whether participation asking data has been received, the participation asking data being data to be transmitted based on the device information by the another information processing apparatus having received the device information, and prompting participation to a service concerning processing of an application program being executed by the another information processing apparatus; and
   an execution determination unit configured to determine whether either execution of an application program for participating in the service, or installation and execution of the application program for participating in the service when it is determined that the participation asking data has been received.
(13) A recording medium in which the program according to (12) is recorded.
(14) An information processing system including:
   a first information processing apparatus connected to a network; and
   a second information processing apparatus,
   wherein the first information processing apparatus includes
   an asking data transmission unit configured to transmit, to the second information processing apparatus, participation asking data prompting participation to a service concerning processing of an application program in execution, based on device information to be transmitted from the second information processing apparatus, and
   the second information processing apparatus includes
   a device information transmission unit configured to transmit information including a communication address in the network, a type of OS, and information concerning hardware to the first information processing apparatus as the device information,
   a participation asking data reception determination unit configured to determine whether the participation asking data has been received, the participation asking data being transmitted based on the device information by the first information processing apparatus having received the device information, and
   an execution determination unit configured to determine whether either execution of an application program for participating in the service, or installation and execution of the application program for participating in the service is executed when it is determined that the participation asking data has been received.

### REFERENCE SIGNS LIST

10 LAN, 11 WAN, 21 to 25 Device, 71 CPU, 72 ROM, 73 RAM, 78 HDD, 101 CPU, 102 ROM, 103 RAM, 111 Removable media

## Claims

1. An information processing apparatus comprising:
a device information transmission unit configured to transmit device information to another information processing apparatus connected to a network;
a participation asking data reception determination unit configured to determine whether participation asking data has been received, the participation asking data being data to be transmitted based on the device information by the another information processing apparatus having received the device information, and prompting participation to a service concerning processing of an application program being executed by the another information processing apparatus; and
an execution determination unit configured to determine whether either execution of an application program for participating in the service, or installation and execution of the application program for participating in the service when it is determined that the participation asking data has been received.

2. The information processing apparatus according to claim 1, wherein, when it is determined that a plurality of the participation asking data respectively prompting participation to a plurality of services has been received,
the execution determination unit
performs notification of allowing a user to determine appropriateness of the participation to each of the plurality of services, and
determines whether either execution of an application program for participating in the service or installation and execution of the application program for participating in the service based on selection by the user.

3. The information processing apparatus according to claim 1, wherein, when it is determined that a plurality of the participation asking data respectively prompting participation to a plurality of services has been received,
the execution determination unit
determines whether either execution of an application program for participating in the services, or execution and installation of the application program for participating in the services based on description of a setting file stored in advance.

4. The information processing apparatus according to claim 1, further comprising:
a device information reception unit configured to receive device information of the another information processing apparatus transmitted from the another information processing apparatus through the network,
wherein, when it is determined that the participation asking data has not been received, and
when an application program incorporated in the information processing apparatus itself is executed,
the information processing apparatus transmits, to the another information processing apparatus, participation asking data prompting participation to a service concerning processing of the executed application program, based on the received device information of the another information processing apparatus.

5. The information processing apparatus according to claim 1, further comprising:
a device information reception unit configured to receive device information of the another information processing apparatus transmitted from the another information processing apparatus through the network,
wherein, when determination of not performing the execution of an application program for participating in the service, or the installation and execution of the application program for participating in the service has been made, and
when an application program incorporated in the information processing apparatus itself is executed,
the information processing apparatus transmits, to the another information processing apparatus, participation asking data prompting participation to a service concerning processing of the executed application program, based on the received device information of the another information processing apparatus.

6. The information processing apparatus according to claim 1, wherein, when determination of performing the execution of an application program for participating in the service has been made by the execution determination unit,
the information processing apparatus executes the application program specified based on information described in the participation asking data.

7. The information processing apparatus according to claim 1, wherein, when determination of performing the installation and execution of the application program for participating in the service has been made by the execution determination unit,
the information processing apparatus downloads and installs the application program based on URL described in the participation asking data, and execute the installed application program.

8. The information processing apparatus according to claim 1, wherein processing by the application program is realized using a function of an agent program incorporated in each of the information processing apparatus itself and the another information processing apparatus.

9. The information processing apparatus according to claim 1, wherein, when it is determined that a plurality of the participation asking data respectively prompting participation to a plurality of services has been received,
the execution determination unit
displays a GUI allowing a user to determine appropriateness of the participation to each of the plurality of services.

10. The information processing apparatus according to claim 1, wherein the device information transmission unit
transmits device information including a communication address in the network, a type of OS, and information concerning hardware to the another information processing apparatus connected to the network.

11. An information processing method comprising the steps of:
transmitting device information to another information processing apparatus connected to a network by a device information transmission unit;
determining, by a participation asking data reception determination unit, whether participation asking data has been received, the participation asking data being data to be transmitted based on the device information by the another information processing apparatus having received the device information, and prompting participation to a service concerning processing of an application program being executed by the another information processing apparatus, and
determining, by an execution determination unit, whether either execution of an application program for participating in the service, or installation and execution of the application program for participating in the service when it is determined that the participation asking data has been received.

12. A program for causing a computer to function as:
a device information transmission unit configured to transmit device information to another information processing apparatus connected to a network;
a participation asking data reception determination unit configured to determine whether participation asking data has been received, the participation asking data being data to be transmitted based on the device information by the another information processing apparatus having received the device information, and prompting participation to a service concerning processing of an application program being executed by the another information processing apparatus; and
an execution determination unit configured to determine whether either execution of an application program for participating in the service, or installation and execution of the application program for participating in the service when it is determined that the participation asking data has been received.

13. A recording medium in which the program according to claim 12 is recorded.

14. An information processing system comprising:
a first information processing apparatus connected to a network; and
a second information processing apparatus,
wherein the first information processing apparatus includes
an asking data transmission unit configured to transmit, to the second information processing apparatus, participation asking data prompting participation to a service concerning processing of an application program in execution, based on device information to be transmitted from the second information processing apparatus, and
the second information processing apparatus includes
a device information transmission unit configured to transmit information including a communication address in the network, a type of OS, and information concerning hardware to the first information processing apparatus as the device information,
a participation asking data reception determination unit configured to determine whether the participation asking data has been received, the participation asking data being transmitted based on the device information by the first information processing apparatus having received the device information, and
an execution determination unit configured to determine whether either execution of an application program for participating in the service, or installation and execution of the application program for participating in the service is executed when it is determined that the participation asking data has been received.
